# EUROPEAN PATENT APPLICATION

(11) **EP 3 498 072 A1**
(43) Date of publication of application: **19.06.2019**
(21) Application number: 18211826.5
(22) Date of filing: 12.12.2018
(51) Int. Cl.: A01D 34/81, B29C 70/00

(54) **LAWNMOWER WITH BODYWORK CONSISTING OF SUPERIMPOSED LAYERS OF CARBON AND KEVLAR**

(30) Priority: 18.12.2017 IT 201700145927
(71) Applicant: Stiga S.p.A. in breve anche St. S.p.A., 31033 Castelfranco Veneto (TV) (IT)
(72) Inventor: ZONTA, Mr. Paolo, 31033 Castelfranco Veneto (TV) (IT)
(74) Representative: Mittler, Andrea

(57) **Abstract**

A lawnmower (1) is described, comprising a bodywork (2), a handle (3), a motor (4) and wheels (5). Said bodywork (2) consists of at least two carbon fiber layers (40, 60) and at least one Kevlar layer (51, 52), said at least one Kevlar layer (51, 52) being between said at least two carbon fiber layers (40, 60).

## Description

The present invention relates to a lawnmower with a bodywork consisting of superimposed layers of carbon and Kevlar.

A lawnmower generally comprises a steel bodywork capable of carrying the motor and covering the cutting means, and a handle consisting of tubular elements again made of steel.

The use of steel allows a valid protection of the mechanical members and a good resistance to wear, but makes the lawnmower heavy to maneuver.

CN-103444285 describes a lawnmower with a frame consisting of carbon fiber and aluminum tubes.

DE-202008008843 shows a lawnmower with a bodywork having a visible surface made of carbon fiber.

The use of carbon fiber lightens the lawnmower but makes it less resistant to knocks.

CN-102042354 discloses the use of Kevlar in components of a braking system suitable for stopping rotating lawnmower means.

KR-976093 describes a lawnmower cutter comprising a rotating cutting plate made of a material comprising Kevlar or carbon fiber.

DE-102012001317 describes a material consisting of a plurality of carbon layers with Kevlar.

Advantageously, Kevlar improves the resistance to knocks but tends to deteriorate and weaken, i.e. it is not suitable for outer surfaces subjected to knocks and scratches.

It is the object of the present invention to provide a lightweight lawnmower with a resistant but not rigid bodywork.

It is a further object of the present invention that said bodywork is resistant to knocks and absorbs vibrations.

According to the invention, said object and further objects are achieved by a lawnmower as described in claim 1.

Advantageously, the stratification allows a lightweight bodywork to be obtained, which simultaneously is resistant to knocks and wear.

Therefore, the lawnmower comprises a bodywork with increased dimensional stability, increased resistance and/or rigidity, together with a decreased weight.

Advantageously, the use of Kevlar on the bodywork ensures increased resistance to knocks and absorption of vibrations, thus benefitting the operator.

These and other features of the present invention will become more apparent from the following detailed description of a practical exemplary embodiment thereof, shown by way of non-limiting example in the accompanying drawings, in which:

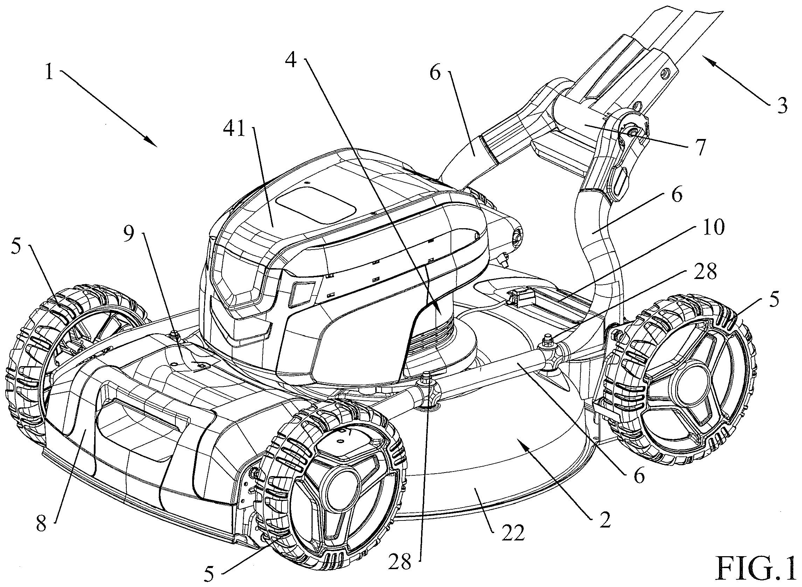

figure 1 shows a perspective view of a lawnmower according to the present invention;

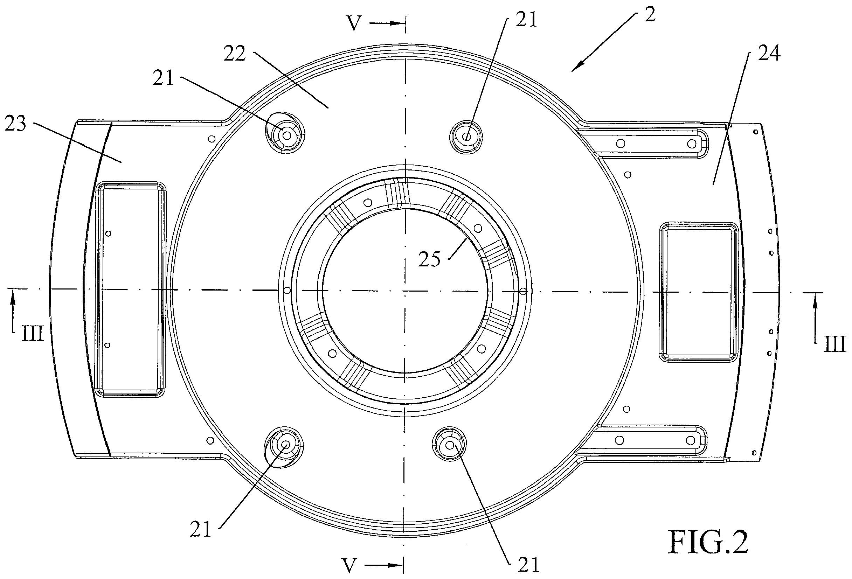

figure 2 shows a top plan view of a bodywork of the lawnmower;

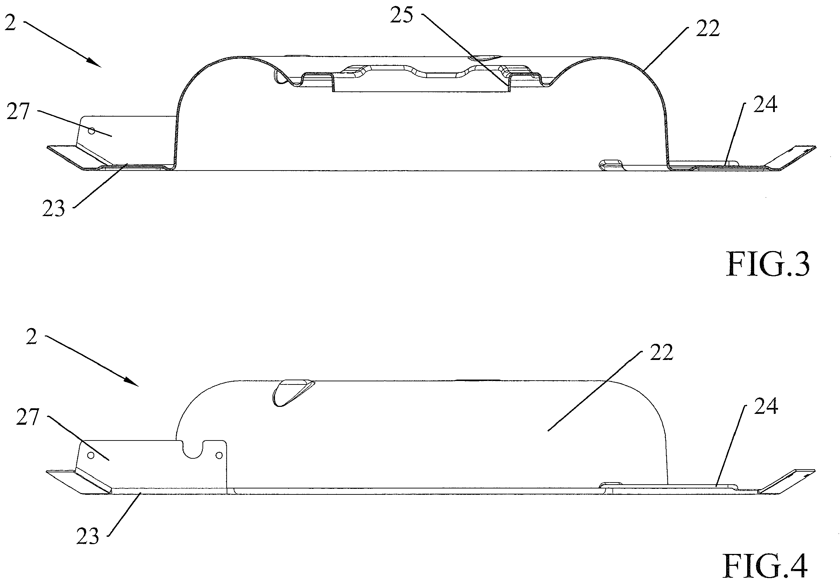

figure 3 shows a sectional view according to line III-III of figure 2;
figure 4 shows a side view of the bodywork;

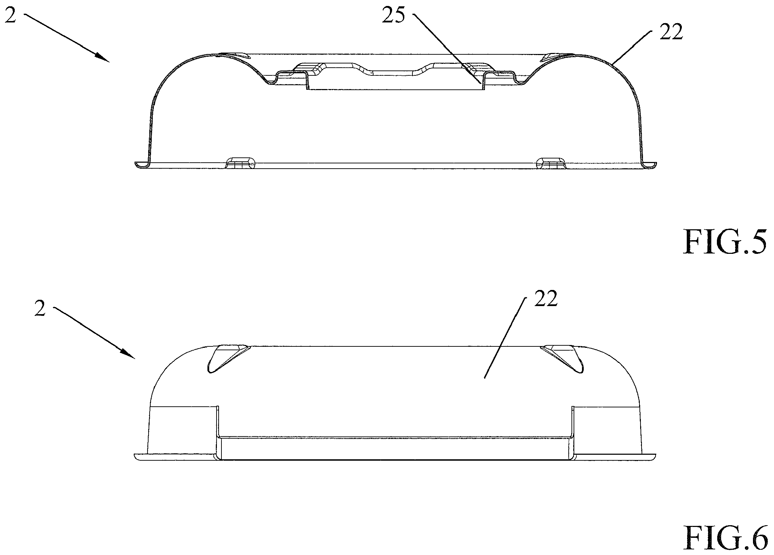

figure 5 shows a sectional view according to line V-V of figure 2;
figure 6 shows a front view of the bodywork;

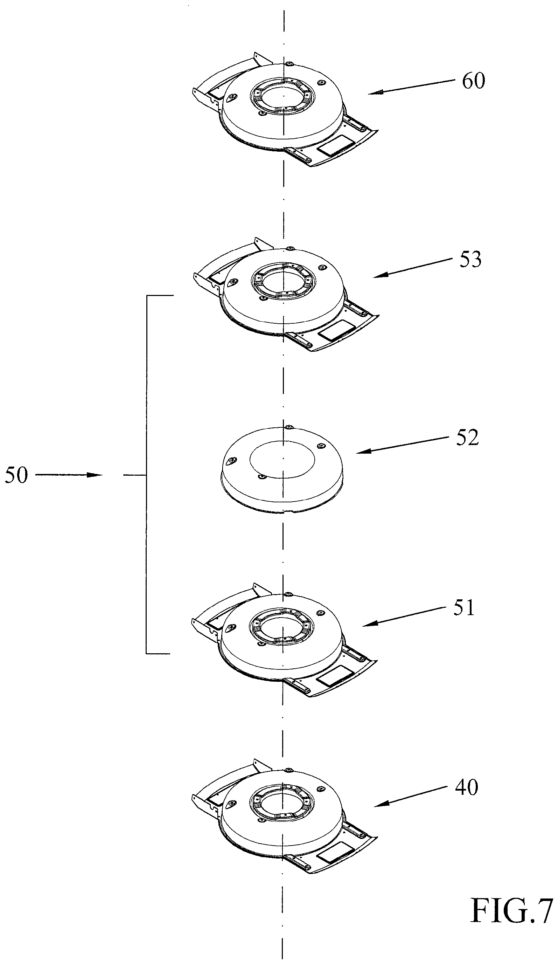

figure 7 shows an exploded perspective view of layers of the bodywork.

A lawnmower 1 comprises a bodywork 2, a handle 3, a motor 4 and wheels 5.

The handle 3 is connected to the bodywork 2 by tubular elements 6 and a joint 7.

Said tubular elements 6 are fastened to the bodywork 2 by screw connection means 28 which engage the holes 21 of an annular portion 22 of the bodywork 2.

The bodywork 2 further comprises a front plate 24 and a rear plate 23, in one piece with said annular portion 22, in addition to connection plates 27.

The annular portion 22 identifies a central through cavity 25 through which the motor 4 faces covered by a shield 41, and is interposed between the front plate 24 and the rear plate 23.

The lawnmower 1 further comprises a front bumper 8 associated with a front frame portion 9 of the lawnmower 1; said front frame portion 9 is coupled to the front plate 24 of the bodywork 2.

Likewise, the rear plate 23 of the bodywork 2 is able to be coupled to a rear frame portion 10 of the lawnmower 1.

The annular portion 22 of the bodywork 2 is able to accommodate the cutting blade (not shown) rotated by the motor 4.

The tubular elements 6 on the front and rear frame portions 9, 10 are made of a composite material consisting of a plurality of carbon fiber layers.

The bodywork 2 is made of a composite material consisting of a plurality of superimposed layers, in particular layers of Kevlar and carbon fiber layers, as will become more apparent later.

The front bumper 8 and joint 7 are made of aluminum, preferably of ERGAL type.

By mere way of example, the layers of bodywork 2 according to a preferred but non-limiting embodiment are described below.

The bodywork 2 comprises one inner carbon fiber layer 40 (the part in contact with the grass cut by the cutting blade), three intermediate layers 50 two of which are made of Kevlar 51, 52 and one of carbon fiber 53, and one outer layer 60 (visible part), again made of carbon fiber.

The first intermediate Kevlar layer 51 is superimposed on said inner layer 40.

The second intermediate Kevlar layer 52 consists only of the annular portion 22 and is superimposed on the annular portion 22 of the first intermediate Kevlar layer 51.

The third intermediate carbon fiber layer 53 is superimposed on said second and third intermediate layers 51, 52.

In particular, the annular portion 22 of the third intermediate carbon fiber layer 53 is superimposed on the annular portion 22 of the second intermediate Kevlar layer 52, while the front and rear plates 23, 24 are superimposed on the front and rear plates 24, 23 of the first intermediate Kevlar layer 51.

The outer carbon fiber layer 60 is superimposed on said third intermediate carbon fiber layer 53.

It is worth noting that all the aforesaid layers consist of the annular portion 22 and of the front and rear plates 24, 23, except the second intermediate Kevlar layer 51.

An agglomerating resin irreversibly joins said layers 40, 50 and 60 according to the following process.

Sheets of carbon fiber and Kevlar pre-impregnated with said resin are inserted into a mold according to the aforesaid sequence.

Vacuum is then created for eliminating the air inside an autoclave where the multi-layer item is subjected to pressure and preset temperature, thus forming the bodywork 2 which may possibly be painted.

Preferably, the inner layer 40 and the third intermediate layer 53 have a thickness ranging between 0.7 and 0.8 mm, even more preferably equal to 0.650 mm.

Preferably, the inner layer 60 has a thickness ranging between 0.2 and 0.3 mm, even more preferably equal to 0.230 mm.

Preferably, the Kevlar layers 51, 52 have a thickness ranging between 0.2 and 0.3 mm, even more preferably equal to 0.250 mm.

Advantageously, the stratification allows a lightweight bodywork 2 to be obtained, and which simultaneously is resistant to knocks without quick wear.

The Kevlar layers are indeed only intermediate, i.e. they are not directly exposed to knocks or scratches.

The second intermediate Kevlar layer 52 advantageously covers only the annular portion 22, i.e. the one most subjected to knocks because it houses the cutting blade.

The lawnmower 1 therefore comprises a bodywork 2 with increased dimensional stability, increased resistance and/or rigidity together with a decreased weight.

Advantageously, the use of Kevlar on bodywork 2 ensures increased resistance to knocks and absorption of vibrations, thus benefitting the operator.

The reduction of weight allows the maneuvers to be facilitated during use, transport and storing.

The reduction of weight results in less pressure of the wheels on the ground, and therefore less compacting of the ground, with the reduction of asphyxia thereof.

The use of aluminum allows the components to have increased resistance to corrosion in addition to further reducing the weight.

## Claims

1. A lawnmower (1) comprising a bodywork (2), a handle (3), a motor (4) and wheels (5), **characterized in that** said bodywork (2) consists of at least two carbon fiber layers (40, 60) and at least one Kevlar layer (51, 52), said at least one Kevlar layer (51, 52) being between said at least two carbon fiber layers (40, 60),
said bodywork (2) comprises an inner carbon fiber layer (40), an outer carbon fiber layer (60), and an intermediate layer (50) between said inner and outer layers (40, 60), said intermediate layer (50) comprising at least one Kevlar layer (51, 52) and at least one carbon fiber layer (53), an agglomerating resin irreversibly joining said layers (40, 50, 60),
said intermediate layer (50) comprises two Kevlar layers (51, 52),
the bodywork (2) comprises an annular portion (22) between a front plate (24) and a rear plate (23),
said bodywork (2) comprises one inner carbon fiber layer (40), three intermediate layers (50) two of which are made of Kevlar (51, 52) and one of carbon fiber (53), and one outer carbon fiber layer (60),
the first intermediate Kevlar layer (51) is superimposed on said inner carbon fiber layer (40),
the second intermediate Kevlar layer (52) consists of only the annular portion (22) and is superimposed on the annular portion (22) of the first intermediate Kevlar layer (51),
the third intermediate carbon fiber layer (53) is superimposed on said second and third intermediate layers (51, 52),
the annular portion (22) of the third intermediate carbon fiber layer (53) is superimposed on the annular portion (22) of the second intermediate Kevlar layer (52), while the front and rear plates (24, 23) of the third intermediate carbon fiber layer (53) are superimposed on the front and rear plates (24, 23) of the first intermediate Kevlar layer (51),
the outer carbon fiber layer (60) is superimposed on said third intermediate carbon fiber layer (53).

2. A lawnmower (1) according to claim 1, **characterized in that** the handle (3) is connected to the bodywork (2) by tubular elements (6) and a joint (7).

3. A lawnmower (1) according to claim 2, **characterized in that** the tubular elements (6) are made of a composite material consisting of at least two carbon fiber layers.

4. A lawnmower (1) according to claim 3, **characterized in that** the joint (7) is made of aluminum.
